# FASCICULE DE BREVET EUROPEEN

(11) **EP 3 048 896 B1**
(45) Date de publication et mention de la délivrance du brevet: **09.08.2017**
(21) Numéro de dépôt: 14793872.4
(22) Date de dépôt: 25.09.2014
(51) Int. Cl.: A23C 9/146, A23C 19/064, A23C 19/082, A23J 1/20

(54) **PROCÉDÉ DE FABRICATION D'UN INGRÉDIENT PRÉSENTANT LES MÊMES FONCTIONNALITÉS QUE LES SELS DE FONTE, INGRÉDIENT ET UTILISATION.**
VERFAHREN ZUR HERSTELLUNG EINES BESTANDTEILS MIT SALZSCHMELZFUNKTION, WIRKSTOFF DAMIT UND VERWENDUNG DAVON
PROCÉDÉ DE FABRICATION D'UN INGRÉDIENT PRÉSENTANT LES MÊMES FONCTIONNALITÉS QUE LES SELS DE FONTE, INGRÉDIENT ET UTILISATION.

(30) Priorité: 26.09.2013 FR 1302238
(43) Date de publication de la demande: 03.08.2016
(73) Titulaire: Euroserum, 70170 Port Sur Saone (FR)
(72) Inventeur: NAEGELE, Delphine, 70000 Pusy Epenoux (FR); PECREAUX, Romain, 70000 Noidand-lès-Vesoul (FR); VAREILLE, Pkilippe, 70000 Noidans Les Vesoul (FR); DE ROQUEMAUREL, Charlotte, 33140 Cadaujac (FR)
(74) Mandataire: Delaveau, Sophie
(86) Numéro de dépôt international: PCT/FR2014/000215
(87) Numéro de publication internationale: WO 2015/044537

(56) Documents cités:
- US-A- 4 202 909

## Description

L'invention concerne principalement un procédé de fabrication d'un ingrédient conférant les mêmes fonctionnalités que les sels de fonte.

L'invention porte en outre sur un ingrédient susceptible d'être obtenu par un tel procédé, ainsi que sur l'utilisation de cet ingrédient comme sel de fonte.

Les fromages fondus sont traditionnellement fabriqués par fonte d'un fromage ou d'un mélange de fromages éventuellement additionnés d'autres produits laitiers.

La fabrication traditionnelle de fromage fondu consiste ainsi en deux étapes essentielles.

En premier lieu, la fabrication de fromage à partir de lait au cours de laquelle se succèdent les opérations connues d'emprésurage, de coagulation, de décaillage, de soutirage, de pressage et enfin d'affinage.

Ensuite, le fromage, ou le plus souvent un mélange de fromages affinés, est broyé et mélangé avec divers ingrédients protéiques laitiers tels que de la poudre de lait, des caséines ou des caséinates.

Le mélange est ensuite fonctionnalisé par des traitements concomitants chimiques, thermiques et mécaniques. A cet effet, des sels de fonte sont ajoutés au mélange. Le mélange obtenu subit ensuite une étape de stabilisation par cuisson-stérilisation puis des étapes de crémage et de texturation finalisent la réorganisation du réseau protéique avant le conditionnement.

Les sels de fonte confèrent un caractère émulsifiant aux protéines pour assurer l'obtention d'une consistance lisse et homogène, sans séparation de phases.

Les sels de fonte couramment utilisés sont des citrates, des orthophosphates ou des polyphosphates ou un mélange de ces composants.

Les sels de fonte connus sont ainsi des produits de synthèse, dont la présence dans les fromages, notamment dans les fromages fondus, nécessitent d'être indiqués sous la mention d'additif.

Par ailleurs, la fabrication de ces sels de fonte de synthèse engendre la mise en oeuvre de procédés conduisant à l'élaboration de coproduits et de déchets polluants.

Dans ce contexte, la présente invention vise principalement un procédé de fabrication d'un ingrédient présentant les mêmes fonctionnalités que les sels de fonte de l'art antérieur et permettant de pallier les inconvénients précités.

A cet effet, le procédé d'élaboration d'un ingrédient de l'invention présentant les mêmes fonctionnalités qu'un sel de fonte, comporte au moins une étape d'extraction de citrates contenus dans une fraction laitière, la teneur en calcium dans l'ingrédient final étant contrôlé tout au long du dit procédé de façon que le rapport massique entre les citrates et le calcium dans l'ingrédient soit supérieur à 20.

On entend par le contrôle de la teneur en calcium la réduction de la teneur en calcium de la fraction laitière, par exemple par traitement préalable du lactosérum par électrodialyse et/ou par passage dans une colonne cationique, ou par le contrôle de la teneur d'un composant ajouté au mélange, de façon que le rapport massique entre les citrates et le calcium dans l'ingrédient reste supérieur à 20.

Le procédé de l'invention peut également comporter les caractéristiques optionnelles suivantes considérées isolément ou selon toutes les combinaisons techniques possibles :
- la fraction laitière est du lactosérum.
- l'étape d'extraction de citrates est réalisée par passage d'un lactosérum dans une colonne anionique.
- une part riche en citrates de l'éluât anionique comportant au moins 20% en extrait sec de citrates est obtenue à l'étape d'extraction de citrates.
- la part riche en citrates de l'éluât anionique est concentrée.
- le lactosérum est écrémé, dialysé, décationné et pasteurisé.
- la colonne anionique est régénérée par une solution basique, par exemple de la soude ou de la potasse, ou par des sels, par exemple des carbonates de sodium.
- le pH de la part riche en citrates de l'éluât anionique est compris entre 5,5 et 7.
- la récupération de la part riche en citrates de l'éluât anionique s'effectue selon deux phases :
   - le démarrage de la récupération est activé lorsque le pourcentage en extrait sec dans l'éluât anionique atteint une valeur minimum d'au moins 2%, et
   - l'arrêt de la récupération est activé lorsque le pH instantané de l'éluât anionique atteint une valeur seuil maximum déterminée pour laquelle le pH de la part riche en citrates de l'éluât anionique est compris entre 5,5 et 7.
- on mesure la conductivité de l'éluât anionique et le démarrage et l'arrêt de la récupération de l'éluât anionique sont respectivement commandés :
   - lorsque la conductivité de l'éluât anionique atteint une première valeur correspondant à la valeur minimum du pourcentage en extrait sec qui conditionne le démarrage de la récupération, et
   - lorsque la conductivité de l'éluât anionique atteint une seconde valeur correspondant pour l'arrêt à la valeur seuil maximum déterminée du pH instantané de l'éluât anionique qui conditionne l'arrêt de la récupération.
- la concentration de l'éluât anionique chargé en citrates est réalisée par évaporation sous vide.
- une base de séchage comportant des protéines laitières est mélangée à l'éluât anionique chargé en citrates et concentré, le taux d'incorporation de la base de séchage étant ajusté de façon que le rapport massique entre les citrates et le calcium dans l'ingrédient soit compris entre 20 et 130.
- la base de séchage est un produit laitier ou une fraction laitière, par exemple du sérum, du sérum déminéralisé, du lait, du lait concentré ou du lait concentré écrémé.
- la base de séchage est du lait concentré écrémé présentant un pourcentage en extrait sec de 32 %, qui est ajouté à l'éluât anionique dans un rapport en poids compris entre 15 % et 50%.
- le lait concentré écrémé est ajouté à l'éluât anionique dans un rapport en poids de 25% lorsque l'éluât anionique est un éluât sodique et dans un rapport en poids de 35% lorsque l'éluât anionique est un éluât potassique.
- le mélange comportant l'éluât anionique chargé en citrates et concentré et la base de séchage, est séché pour l'obtention d'un ingrédient sous forme de poudre.
- le séchage du mélange comportant l'éluât anionique chargé en citrates et concentré est réalisé par atomisation.

L'invention porte également sur un ingrédient sous forme liquide présentant les mêmes fonctionnalités que les sels de fonte, qui est obtenu par le procédé tel que décrit précédemment avant mélange avec la base de séchage, qui comporte des citrates, des lactates et des phosphates, et pour lequel le rapport massique entre les citrates et le calcium dans le dit ingrédient est supérieur à 20.

L'invention porte en outre sur un ingrédient sous forme de poudre présentant les mêmes fonctionnalités que les sels de fonte, obtenu par le procédé tel que décrit précédemment après séchage, qui comporte des citrates, des lactates et des phosphates, et pour lequel le rapport massique entre les citrates et le calcium dans le dit ingrédient est compris entre 20 et 130.

Avantageusement, l'ingrédient sous forme de poudre de l'invention est contrôlé en teneur en sodium et comporte un mélange d'un ingrédient sous forme de poudre pour lequel la solution basique utilisée pour la régénération de la colonne anionique est de la soude, et d'un ingrédient sous forme de poudre pour lequel la solution basique utilisée pour la régénération de la colonne anionique est de la potasse.

L'invention porte enfin sur l'utilisation d'un tel ingrédient comme sel de fonte.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est un schéma synoptique du procédé de l'invention,
- la figure 2 est un graphique représentant l'évolution des quantités de sodium, citrates, et phosphore dans l'éluât anionique d'un lactosérum obtenu par régénération sodique de la colonne anionique exprimées en fonction du volume d'élution,
- la figure 3 est un graphique représentant l'évolution du pH, de la conductivité et de la teneur en extrait sec de l'éluât anionique d'un lactosérum obtenu par régénération sodique de la colonne anionique exprimés en fonction du volume d'élution,

- la figure 4 est un graphique représentant l'évolution des quantités de potassium, citrates et phosphores dans l'éluât anionique d'un lactosérum obtenu par régénération potassique de la colonne anionique exprimées en fonction du volume d'élution, et
- la figure 5 est un graphique représentant l'évolution du pH, de la conductivité et de la teneur en extrait sec de l'éluât anionique d'un lactosérum obtenu par régénération potassique de la colonne anionique exprimés en fonction du volume d'élution..

Le procédé de l'invention consiste essentiellement en une extraction contrôlée des citrates contenus dans une fraction laitière. On entend par fraction laitière un produit issu du lait.

A cet effet, la fraction laitière peut être un coproduit ou une fraction du coproduit de l'opération de coagulation du lait dans le cadre de la fabrication des fromages, par exemple du lactosérum.

La fraction laitière peut également être un sérum de microfiltration de lait ou d'un produit laitier.

L'extraction contrôlée des citrates peut être réalisée par tout procédé adapté. Dans la description qui suit, cette extraction contrôlée est réalisée par passage d'une fraction laitière dans une colonne anionique. Cette fraction laitière est de préférence appauvrie ou dépourvue de caséines ce qui permet de faciliter son passage dans la colonne anionique.

Dans la description qui suit, la fraction laitière est du lactosérum qui est naturellement riche en sels, en protéines, et en minéraux, notamment en citrates et en phosphates.

De façon connue, le lactosérum est déminéralisé, notamment pour contrôler les teneurs en protéines sériques en lactose et en minéraux des laits infantiles.

Selon l'invention, l'ingrédient est avantageusement obtenu à partir d'un coproduit de l'une des opérations de déminéralisation d'un lactosérum.

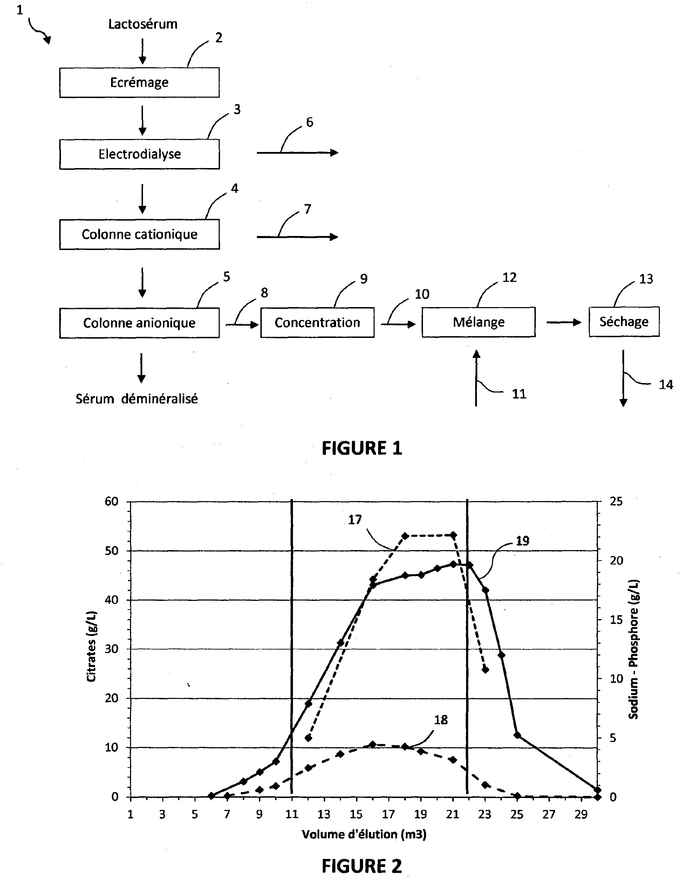

En référence à la figure 1, le procédé de déminéralisation d'un lactosérum 1 comprend notamment une étape d'écrémage 2 permettant de diminuer la teneur en matières grasses du lactosérum, suivie d'une étape d'électrodialyse 3 par laquelle est obtenu un lactosérum dialysé contenant 50 à 60% en poids en moins de minéraux.

Le lactosérum écrémé et dialysé passe ensuite dans une colonne cationique 4 d'où il ressort décationné, puis dans une colonne anionique 5 à la sortie de laquelle le lactosérum est dit déminéralisé.

Chacune de ces quatre étapes engendre la production de coproduits, à savoir de la saumure 6 pour l'électrodialyse 3, un éluât cationique 7 lors du passage du lactosérum dans une colonne cationique 4, et un éluât anionique 8 lors du passage du lactosérum écrémé, dialysé, décationné et pasteurisé à travers la colonne anionique.

Habituellement l'éluât anionique est envoyé en station d'épuration ou utilisé pour de l'épandage après avoir subi un traitement approprié.

Selon l'invention, cet éluât anionique comportant naturellement des citrates et des phosphates est utilisé pour élaborer un ingrédient dont les fonctionnalités sont celles des sels de fonte de l'art antérieur.

On cherche à obtenir une part suffisamment riche en citrates de l'éluât anionique de façon que l'ingrédient en résultant présente des propriétés comparables à celles des sels de fonte connus.

Il est par ailleurs nécessaire que dans l'ingrédient, les citrates soient en majorité associés à des éléments monovalents pour pouvoir présenter les mêmes fonctionnalités que les sels de fonte. A l'inverse, leur association majoritaire avec des éléments bivalents, tel que le calcium par exemple, engendrerait une perte de leur caractère fonctionnel, l'ingrédient ne pouvant ainsi plus présenter les mêmes fonctionnalités que les sels de fonte. On entend par une part riche en citrates, un éluât anionique présentant une concentration en citrates dans l'extrait sec d'au moins 20%.

Par ailleurs, on cherche également à obtenir un éluât anionique comportant des phosphates dont la concentration dans l'extrait sec est d'au moins 3%.

Mais il est également nécessaire de se conformer à d'autres exigences propres aux sels de fontes, notamment en matière de pH.

A cet effet, lorsque les sels de fonte visés sont utilisés pour la fabrication de fromages fondus, le pH de l'éluât anionique chargé en citrates doit être compris entre 5,5 et 7. Cette gamme de pH permet de s'affranchir de l'ajout ultérieur d'additifs d'ajustement du pH et d'obtenir ainsi un ingrédient ne comportant aucun additif.

On peut néanmoins prévoir la récupération de l'éluât présentant un pH plus basique, par exemple jusqu'à 10, mais dans cette hypothèse, l'ajout d'un auxiliaire correctif de pH devra être prévu.

On cherche donc à obtenir un éluât anionique 8 chargé en citrates mais répondant également aux conditions de pH sus mentionnées.

Par ailleurs, l'obtention de l'éluât anionique est conditionnée par la régénération de la colonne anionique permettant de décrocher les minéraux accumulés lors du passage du lactosérum des particules de résines de la colonne anionique.

Selon l'invention, la régénération de la colonne anionique est réalisée avec une solution basique constituée par exemple de soude ou de potasse. Il en résulte que selon le cas, l'éluât anionique obtenu comporte soit du sodium, soit du potassium. Alternativement, on peut prévoir que la colonne anionique soit régénérée par des sels tels que des carbonates de sodium.

Selon l'invention, on récupère ainsi une part riche en citrates de l'éluât anionique issue de la régénération de la colonne anionique. Le démarrage et l'arrêt de la récupération de cette part riche en citrates sont conditionnés par la teneur en citrates de l'éluât anionique récupéré, mais également par le pH de cet éluât.

En outre, cette récupération peut avantageusement être également conditionnée par la teneur en extrait sec de l'éluât anionique récupéré. En effet, dans le cas où l'ingrédient visé est sous forme de poudre, plus la part riche en citrates de l'éluât anionique présente une teneur en extrait sec élevée, plus la consommation énergétique de ou des opérations ultérieures sera faible.

Ainsi, l'opération de récupération de la part riche en citrates peut être conditionnée par la combinaison de critères instantanées de l'éluât anionique en sortie de colonne tenant à sa teneur en extrait sec, son pH et sa teneur en citrates et permettant d'obtenir une part riche en citrates, pH et teneur en extrait sec, adaptés pour l'élaboration de l'ingrédient.

Ces critères peuvent être illustrés par la valeur instantanée de la conductivité de l'éluât anionique. Ainsi, le démarrage et l'arrêt de la récupération de l'éluât anionique peuvent être conditionnés par des valeurs seuils de conductivité de l'éluât.

La part riche en citrates 8 de l'éluât anionique est ensuite concentrée par évaporation sous vide dans un évaporateur sous vide à flot tombant. Cette étape permet d'augmenter la teneur en extrait sec de l'éluât riche en citrates pour éviter une surconsommation énergétique lors de l'étape ultérieure de séchage.

Alternativement, tout autre procédé adéquat peut être utilisé pour cette étape de concentration.

En sortie de l'évaporateur, l'éluât riche en citrates et concentré 10 présente un pourcentage en extrait sec de l'ordre de 40%.

Pour éviter des problèmes d'hygroscopicité de l'ingrédient sous forme de poudre, une base de séchage 11 est ajoutée à l'éluât riche en citrates et concentré 10. Cette base de séchage comporte avantageusement des protéines laitières. Elle peut ainsi être constituée de lait, de lait écrémé, de lait écrémé concentré, de lactosérum, de lactosérum déminéralisé ou d'un mélange de ces composants.

On cherche par cet ajout, et en premier lieu, à obtenir une poudre présentant un pourcentage maximum d'humidité absorbé de 20% et comportant un pourcentage en poids d'environ 8% de protéine laitière.

De façon plus générale, on détermine la teneur en base de séchage qui est mélangée à l'éluât anionique chargé en citrates et concentré de façon à ce que le pourcentage massique de protéine laitière dans l'ingrédient soit d'environ 8%.

Par ailleurs, la base de séchage comporte une part non négligeable de calcium. Or, comme expliqué précédemment, il est essentiel qu'une majeure partie des citrates présents dans l'ingrédient ne soient pas associés à des éléments bivalents, et donc en particulier au calcium, afin que l'ingrédient conserve toutes les fonctionnalités d'un sel de fonte. Il est donc nécessaire d'évaluer également la teneur en base de séchage dans ce sens.

Plus précisément, on évalue le taux d'incorporation de la base de séchage dans l'éluât anionique pour que dans l'ingrédient, le rapport massique rapporté à l'extrait sec entre les citrates et le calcium soit compris entre 20 et 130. La limite inférieure de 20 de ce rapport correspond à un taux d'incorporation de base de séchage maximum conduisant à une teneur minimum en citrates fonctionnalisés dans l'ingrédient, et la limite supérieure de 130 correspond à un taux d'incorporation de base de séchage minimum pour éviter les problèmes d'hygroscopicité de l'ingrédient sous forme de poudre.

Lorsque la base de séchage utilisée est un lait concentré écrémé présentant un pourcentage en extrait sec de 32 %, cette limite inférieure de 20 du rapport massique entre les citrates et le calcium dans l'ingrédient, correspond à l'ajout de cette base de séchage à l'éluât anionique dans un rapport en poids de 50%. La limite supérieure de 130, correspond quant à elle à l'ajout de cette base de séchage à l'éluât anionique dans un rapport en poids de 15%.

Préférentiellement, on ajoute à l'éluât riche en citrates et concentré 10 du lait concentré écrémé présentant un pourcentage en extrait sec de 32 % dans un rapport en poids de 25 % pour un éluât sodique, et de 35% pour un éluât potassique, ces taux d'incorporation assurant à la fois une teneur optimale en citrates fonctionnalisés dans l'ingrédient et un taux optimal de protéines laitières évitant les problèmes d'hygroscopicité de ce même ingrédient.

Dans le cas de l'utilisation d'un autre type de base de séchage, l'homme du métier évalue le taux d'incorporation de la base de séchage pour que d'une part, la teneur en base de séchage soit suffisante, et pour que d'autre part, dans l'ingrédient final, le rapport massique entre les citrates et le calcium soit compris entre 20 et 130; De façon plus générale, dans le procédé de l'invention, le contrôle du taux de calcium présent dans l'ingrédient final doit être fait dans ce sens.

La part riche en citrates de l'éluât anionique et concentrée 10 ainsi que le lait concentré écrémé sont mélangés sous agitation mécanique.

Optionnellement, une nouvelle étape de concentration du mélange obtenu peut être prévue.

Le mélange ainsi constitué 12 est ensuite séché par atomisation 13 ou par tout autre procédé adapté.

La poudre obtenue 14 constitue ainsi un ingrédient présentant les mêmes fonctionnalités que les sels de fonte et pouvant être utilisé dans la fabrication des fromages fondus au lieu et place des sels de fontes obtenus par synthèse chimique de l'art antérieur.

Lorsque la poudre 14 est issue d'une régénération sodique, elle comporte une teneur en sodium non négligeable.

Or en matière de santé, la surconsommation de sodium est visée comme étant l'un des principaux facteurs de risques de certaines maladies, notamment des maladies cardiovasculaires.

C'est pourquoi l'emploi d'une poudre 14 issue d'une régénération potassique permet de contrôler la teneur en sodium de l'ingrédient de l'invention.

Pour ce faire, un mélange est opéré entre l'ingrédient sous forme de poudre issu d'une régénération sodique et l'ingrédient sous forme de poudre issu d'une régénération potassique, les teneurs respectives des deux poudres étant ajustées selon le rapport visé entre les teneurs en sodium et en potassium. On obtient alors l'ingrédient de l'invention 14 dans lequel la teneur en sodium est précisément contrôlée.

L'ingrédient de l'invention peut également être sous forme liquide. Dans cette hypothèse, l'ingrédient est constitué de la part riche en citrates 8 de l'éluât anionique ou de la part riche en citrates et concentrée 10 de l'éluât anionique en sortie de l'évaporateur thermique.

De la même façon que pour un ingrédient sous forme de poudre, le mélange entre la part riche en citrates de l'éluât liquide obtenu par régénération sodique et la part riche en citrates de l'éluât liquide obtenu par régénération potassique permet de contrôler la teneur en sodium de l'ingrédient liquide.

Lorsque l'ingrédient est sous forme liquide, aucune base de séchage n'est ajouté ce dont il résulte l'absence de calcium dans l'ingrédient sauf sous forme de traces.

On décrit ci-après à titre d'exemple l'opération de récupération de la part riche en citrates de l'éluât anionique en sortie de colonne anionique.

En référence à la figure 2, on mesure l'évolution de la concentration exprimée en grammes par litre des citrates 17, du phosphore 18 et du sodium 19 contenus dans l'éluât anionique issu d'une régénération de la colonne anionique par de la soude et en fonction du volume d'élution.

La colonne anionique utilisée pour cet exemple comporte 8000 litres de résine.

On observe un décalage dans la récupération des minéraux contenus dans l'éluât anionique, ce décalage étant principalement attribué au volume mort de la colonne. Pour la colonne anionique spécifiquement utilisée, les minéraux apparaissent à partir environ de 7 mètres cubes d'éluât anionique.

Leur teneur augmente avec le volume d'élution, pour diminuer à partir d'un volume d'élution de 21 mètres cubes environ.

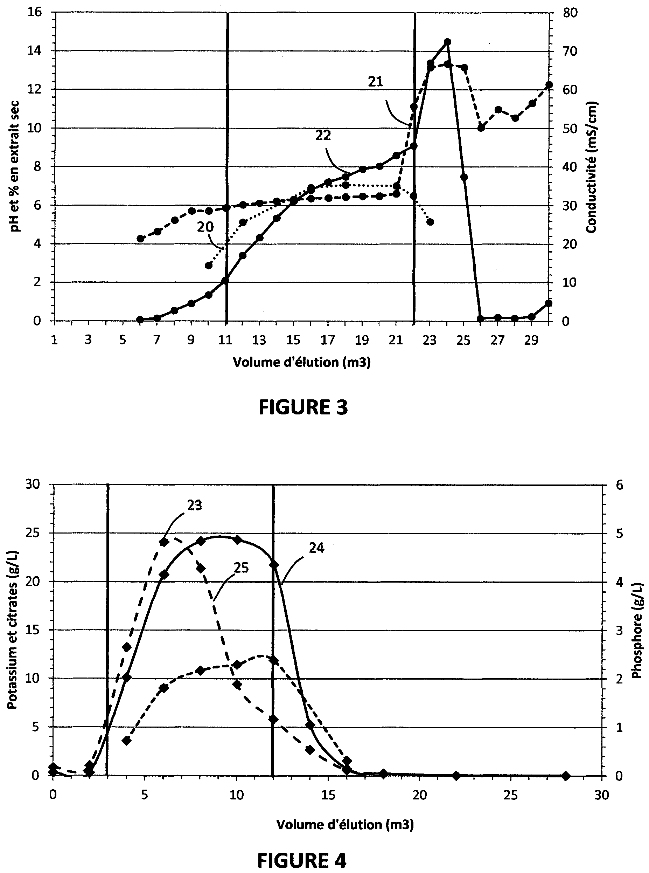

En référence à la figure 3, l'évolution de la teneur en extrait sec 20 de l'éluât anionique est conforme à l'évolution de la teneur des composants de l'éluât.

Lorsque l'on souhaite fabriquer l'ingrédient sous forme de poudre, une étape de séchage, qui sera décrite ultérieurement, doit être prévue.

A cet effet, on cherche à obtenir un produit économiquement séchable. Il en résulte que l'éluât anionique doit comporter un pourcentage en extrait sec supérieur à 2% et de préférence de l'ordre de 5 à 6 %.

Le démarrage de la récupération de l'éluât anionique est ainsi conditionné par le pourcentage en extrait sec de l'éluât anionique,

Selon cet exemple, la récupération de l'éluât anionique est effectuée à partir d'un volume d'élution de 11 mètres cube correspondant à un pourcentage en extrait sec de 4% dans l'éluât anionique.

En ce qui concerne l'évolution du pH 21 en fonction de volume d'élution, on constate que le pH est relativement stable entre 6 et 6,2 jusqu'à un volume d'élution de 21 mètre cube, puis augmente rapidement pour atteindre un pH de 13 pour un volume d'élution de 23 mètres cube. Cette augmentation est attribuée à la fin du phénomène d'échange d'ions, il y a alors une arrivée massive d'ions hydroxyde (OH-) provenant de la soude. Lorsque l'on souhaite éviter tout ajustement ultérieur de pH, on fixe à 22 mètres cube l'arrêt de la récupération de l'éluât anionique.

L'augmentation du pH correspondant à la baisse de la teneur en minéraux dans l'éluât (figure 2), il en résulte que l'éluât anionique qui est récupéré est à la fois riche en citrates, mais également optimal pour l'opération ultérieure de séchage et conforme aux exigences en matière de pH.

Dans le cas où un ajustement en pH est réalisé ultérieurement, par exemple par ajout d'acide chlorhydrique, l'arrêt de la récupération de l'éluât anionique peut être décalé vers un volume d'élution plus important de 23 à 24 mètres cube, permettant ainsi d'augmenter la teneur en citrates récupérés dans l'éluât anionique.

En référence à la figure 3, on constate que la conductivité 22 de l'éluât anionique reflète à la fois l'augmentation de la teneur en extrait sec en début de récupération, mais également l'augmentation du pH en fin de récupération. Il est ainsi avantageux d'effectuer un étalonnage de la colonne pour déterminer la valeur de la conductivité à partir de laquelle l'éluât anionique est récupéré et la valeur de la conductivité pour laquelle la récupération est arrêtée, ces valeurs rendant compte des seuils de pourcentage en extrait sec et en pH explicités précédemment.

Dans cet exemple, la récupération commencera à être effectuée pour une conductivité de 10 mS/cm et arrêtée lorsque l'éluât anionique présentera une conductivité de 45 mS/cm.

En référence à la figure 4, l'évolution des teneurs en citrate 23, potassium 24 et phosphore 25 lorsque la solution basique utilisée pour régénérer la colonne anionique est de la potasse, est similaire à celle obtenue pour une régénération à la soude.

On constate néanmoins un décalage des pics de citrate 23, potassium 24 et phosphore 25 vers des volumes d'élution plus faible. Le démarrage de la récupération de l'éluât anionique sera donc adapté vers des volumes d'élution plus bas.

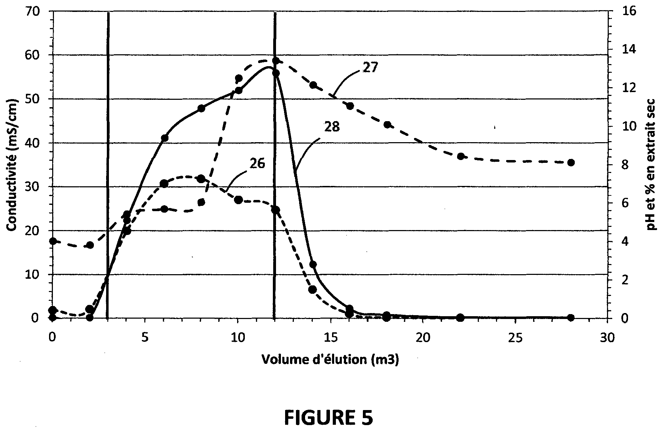

Comme dans le cas de la régénération par l'éluât sodique, on tient compte de l'évolution du pourcentage en extrait sec 26 et du pH 27 représentés sur la figure 5 pour fixer le démarrage et l'arrêt de la récupération.

Plus précisément et pour une colonne anionique régénérée en potasse de 8000 litres de résine, le démarrage de la récupération de l'éluât anionique sera fixé à un volume d'élution de 3 mètres cube correspondant à un pourcentage en extrait sec de 4,25, et l'arrêt de la récupération de l'éluât à 12 mètres cube.

Comme pour la régénération anionique, ces valeurs permettant de récupérer un éluât à la fois riche en citrates, mais également optimal pour l'opération ultérieure de séchage et conforme aux exigences en matière de pH.

Par ailleurs, la conductivité 28 étant également en phase avec l'augmentation du pourcentage en extrait sec et l'augmentation du pH, on détermine les valeurs de conductivité correspondant aux volumes d'élution de démarrage de 3 mètres cube et d'arrêt de récupération de 12 mètres cube.

Dans cet exemple, la récupération commencera à être effectué pour une conductivité de 2,2 mS/cm environ et arrêtée lorsque l'éluât anionique présentera une conductivité de 13 mS/cm.

Il en résulte que pour une colonne anionique donnée, le démarrage et l'arrêt de la récupération de l'éluât anionique peuvent être activés respectivement à une première conductivité déterminée en fonction de la teneur en extrait sec dans l'éluât, et à une seconde conductivité déterminée en fonction de la remontée en pH, comme expliqué précédemment.

Le contrôle du démarrage et de l'arrêt de la récupération de l'éluât anionique régénérée par de la soude ou de la potasse permet ainsi d'obtenir un éluât anionique riche en citrates dont le pH, le pourcentage d'extrait sec ainsi que les concentrations des composants sont présentés dans le Tableau 1 ci-dessous.

**Tableau 1**

| | Eluât sodique | Eluât potassique |
|---|---|---|
| pH | 6.09 | 6.2 |
| Extrait sec (%) | 7.2 | 5.9 |
| Sodium (en % de l'ES) | 22.74 | 0.32 |
| Potassium (en % de l'ES) | ≈0.4 | 32.06 |
| Lactates (en % de l'ES) | 7,2 | 7,3 |
| Phosphore (en % de l'ES) | 5.05 | 6.09 |
| Citrate (en % de l'ES) | 38,7 | 30.91 |

On constate la présence de lactates dans les éluâts potassique et sodique, ces lactates provenant du lactosérum utilisé pour élaborer l'ingrédient de l'invention. Les lactates seront également présents lorsque la fraction laitière utilisée sera différente d'un lactosérum.

Par conséquent, les éluâts potassique et sodique, ainsi que l'ingrédient de l'invention qu'il soit sous forme liquide ou sous forme de poudre et qu'il soit obtenu à partir de lactosérum ou d'une autre fraction laitière sont ainsi notamment caractérisés par la présence de lactates en plus des citrates et des phosphates.

On constate par ailleurs l'absence de calcium dans l'éluât anionique, le calcium étant été préalablement extrait du lactosérum lors de l'électrodialyse et lors du passage dans la colonne cationique.

Des tests ont été réalisés pour comparer la texture d'un fromage fondu dans lequel des sels de fonte de l'invention ont été utilisés dans la formulation, avec un fromage fondu comportant des sels de fonte du commerce.

L'élaboration des fromages fondus est faite selon les procédés connus décrits dans le préambule de la description.

Le Tableau 2 ci-dessous présente les résultats en terme de dureté, d'adhésivité, de cohésion et d'élasticité de fromages fondus dans lesquels les sels de fonte de l'invention sont issus soit d'une régénération sodique soit d'une régénération potassique. Ces résultats sont comparés à des fromages fondus témoins préparés avec des sels de fonte traditionnels.

On constate que tous les résultats en terme de dureté, d'adhésivité, de cohésion et d'élasticité sont proches des résultats obtenus pour le témoin.

**Tableau 2**

| | Dureté (Newton) | Adhésivité (milliJoules) | Cohésion | Elasticité (millimètres) |
|---|---|---|---|---|
| Témoin | 0,71 | 2,97 | 0,77 | 11,79 |
| Récupération sodique | 0,79 | 2,68 | 0,86 | 11,83 |
| Récupération potassique | 0,66 | 2,95 | 0,90 | 11,55 |

L'ingrédient de l'invention est ainsi obtenu à partir d'un produit naturel, le lactosérum ou tout autre fraction laitière, de préférence du lactosérum écrémé, dialysé, décationné et pasteurisé et présente des propriétés comparables aux sels de fonte de l'art antérieur.

Ainsi, l'étiquetage d'un fromage, notamment d'un fromage fondu, comportant l'ingrédient de l'invention, ne nécessitera pas l'apposition de la mention d'additif, mention qui est obligatoire lorsque des sels de fonte de synthèse sont utilisés.

Par ailleurs, le procédé d'obtention de l'ingrédient de l'invention s'intègre dans le procédé d'élaboration d'un lactosérum déminéralisé en valorisant un coproduit de ce procédé et en réduisant ainsi la fabrication de produits polluants.

## Revendications

1. Procédé d'élaboration d'un ingrédient riche en citrates présentant les mêmes fonctionnalités qu'un sel de fonte, lequel procédé comporte au moins une étape d'extraction des citrates contenus dans une fraction laitière, la teneur en calcium dans l'ingrédient final étant contrôlée tout au long du dit procédé de façon que le rapport massique entre les citrates et le calcium dans l'ingrédient soit supérieur à 20.

2. Procédé selon la revendication 1, **caractérisé en ce que** la fraction laitière est du lactosérum.

3. Procédé selon la revendication 2, **caractérisé en ce que** le lactosérum est écrémé, dialysé, décationné et pasteurisé.

4. Procédé selon l'une quelconque des revendications 1 à 3, **caractérisé en ce que** l'étape d'extraction de citrates est réalisée par passage d'un lactosérum dans une colonne anionique.

5. Procédé selon la revendication 4, **caractérisé en ce que** la colonne anionique est régénérée par une solution pour décrocher les minéraux accumulés lors du passage du lactosérum des particules de résines de ladite colonne anionique.

6. Procédé selon la revendication 5, **caractérisé en ce que** la colonne anionique est régénérée par une solution basique, par exemple de la soude ou de la potasse ou par des sels, par exemple des carbonates de sodium.

7. Procédé selon l'une quelconque des revendications 4 à 6, **caractérisé en ce qu'**on récupère une part riche en citrates de l'éluât anionique issue de la régénération de la colonne anionique.

8. Procédé selon la revendication 7, **caractérisé en ce que** la part riche en citrates comporte au moins 20% de citrates sur l'extrait sec de la dite part riche en citrates.

9. Procédé selon l'une quelconque des revendications 7 et 8, **caractérisé en ce que** le pH de la part riche en citrates de l'éluât anionique est compris entre 5,5 et 7.

10. Procédé selon l'une quelconque des revendications 4 à 9, **caractérisé en ce que** la récupération de la part riche en citrates de l'éluât anionique s'effectue selon deux phases :
- le démarrage de la récupération est activé lorsque le pourcentage en extrait sec dans l'éluât anionique atteint une valeur minimum d'au moins 2%, et
- l'arrêt de la récupération est activé lorsque le pH instantané de l'éluât anionique atteint une valeur seuil maximum déterminée pour laquelle le pH de la part riche en citrates de l'éluât anionique est compris entre 5,5 et 7.

11. Procédé selon la revendication 10, **caractérisé en ce qu'**on mesure la conductivité de l'éluât anionique et **en ce que** le démarrage et l'arrêt de la récupération de l'éluât anionique sont respectivement commandés :
- lorsque la conductivité de l'éluât anionique atteint une première valeur correspondant à la valeur minimum du pourcentage en extrait sec qui conditionne le démarrage de la récupération, et
- lorsque la conductivité de l'éluât anionique atteint une seconde valeur correspondant pour l'arrêt à la valeur seuil maximum déterminée du pH instantané de l'éluât anionique qui conditionne l'arrêt de la récupération.

12. Procédé selon l'une quelconque des revendications 7 à 11, **caractérisé en ce que** la part riche en citrates de l'élut anionique est concentrée, **en ce qu'**une base de séchage comportant des protéines laitières qui est un produit laitier ou une fraction laitière, par exemple du sérum, du sérum déminéralisé, du lait, du lait concentré ou du lait concentré écrémé, est mélangée à l'éluât anionique chargé en citrates et concentré, le taux d'incorporation de la base de séchage étant ajusté de façon que le rapport massique entre les citrates et le calcium dans l'ingrédient soit compris entre 20 et 130, et **en ce que** le mélange comportant l'éluât anionique chargé en citrates et concentré, et la base de séchage, est séché par atomisation pour l'obtention d'un ingrédient sous forme de poudre.

13. Ingrédient présentant les mêmes fonctionnalités que les sels de fonte, **caractérisé en ce qu'**il est sous forme liquide, **en ce qu'**il est susceptible d'être obtenu par le procédé selon l'une quelconque des revendications 1 à 11, **en ce qu'**il comporte des citrates, des lactates et des phosphates, et **en ce que** le rapport massique entre les citrates et le calcium dans le dit ingrédient est supérieur à 20.

14. Ingrédient présentant les mêmes fonctionnalités que les sels de fonte, **caractérisé en ce qu'**il est sous forme de poudre, **en ce qu'**il est susceptible d'être obtenu par le procédé selon la revendication 12, **en ce qu'**il comporte des citrates, des lactates et des phosphates, et **en ce que** le rapport massique entre les citrates et le calcium dans le dit ingrédient est compris entre 20 et 130.

15. Utilisation de l'ingrédient selon l'une quelconque des revendications 13 et 14 comme sel de fonte.

## Patentansprüche

1. Verfahren zur Herstellung eines an Citraten reichen Inhaltsstoffs, der die gleichen Funktionalitäten wie ein Schmelzsalz aufweist, wobei das Verfahren mindestens einen Schritt der Extraktion von Citraten umfasst, die in einer Milchfraktion enthalten sind, wobei der Calciumgehalt in dem finalen Inhaltsstoff während des gesamten Verfahrens gesteuert wird, so dass das Massenverhältnis zwischen den Citraten und Calcium in dem Inhaltsstoff größer als 20 ist.

2. Verfahren nach Anspruch 1, **dadurch gekennzeichnet, dass** die Milchfraktion Molke ist.

3. Verfahren nach Anspruch 2, **dadurch gekennzeichnet, dass** die Molke entrahmt, dialysiert, dekationisiert und pasteurisiert ist.

4. Verfahren nach einem der Ansprüche 1 bis 3, **dadurch gekennzeichnet, dass** der Schritt der Extraktion von Citraten durch Durchlauf einer Molke in einer anionischen Säule durchgeführt wird.

5. Verfahren nach Anspruch 4, **dadurch gekennzeichnet, dass** die anionische Säule durch eine Lösung regeneriert wird, um die während des Durchlaufs der Molke akkumulierten Mineralien von den Harzpartikeln der anionischen Säule zu trennen.

6. Verfahren nach Anspruch 5, **dadurch gekennzeichnet, dass** die anionische Säule durch eine basische Lösung, beispielsweise Natron oder Kali, oder durch Salze, beispielsweise Natriumcarbonate, regeneriert wird.

7. Verfahren nach einem der Ansprüche 4 bis 6, **dadurch gekennzeichnet, dass** ein an Citraten reicher Teil des anionischen Eluats, der aus der Regeneration der anionischen Säule stammt, zurückgewonnen wird.

8. Verfahren nach Anspruch 7, **dadurch gekennzeichnet, dass** der an Citraten reiche Teil mindestens 20 % Citrate im Trockenextrakt des an Citraten reichen Teils umfasst.

9. Verfahren nach einem der Ansprüche 7 und 8, **dadurch gekennzeichnet, dass** der pH-Wert des an Citraten reichen Teils des anionischen Eluats zwischen 5,5 und 7 liegt.

10. Verfahren nach einem der Ansprüche 4 bis 9, **dadurch gekennzeichnet, dass** die Rückgewinnung des an Citraten reichen Teils des anionischen Eluats in zwei Phasen durchgeführt wird:
- das Starten der Rückgewinnung wird aktiviert, wenn der Prozentsatz von Trockenextrakt in dem anionischen Eluat einen Mindestwert von mindestens 2 % erreicht, und
- das Stoppen der Rückgewinnung wird aktiviert, wenn der momentane pH-Wert des anionischen Eluats einen bestimmten maximalen Schwellenwert erreicht, für den der pH-Wert des an Citraten reichen Teils des anionischen Eluats zwischen 5,5 und 7 liegt.

11. Verfahren nach Anspruch 10, **dadurch gekennzeichnet, dass** die Leitfähigkeit des anionischen Eluats gemessen wird und dadurch, dass das Starten bzw. Stoppen der Rückgewinnung des anionischen Eluats angewiesen wird:
- wenn die Leitfähigkeit des anionischen Eluats einen ersten Wert erreicht, der dem Mindestwert des Prozentsatzes in Trockenextrakt entspricht, der das Starten der Rückgewinnung bedingt, und
- wenn die Leitfähigkeit des anionischen Eluats einen zweiten Wert erreicht, der für das Stoppen dem maximalen Schwellenwert entspricht, der aus dem momentanen pH-Wert des anionischen Eluats bestimmt wird, der das Stoppen der Rückgewinnung bedingt.

12. Verfahren nach einem der Ansprüche 7 bis 11, **dadurch gekennzeichnet, dass** der an Citraten reiche Teil des anionischen Eluats konzentriert ist, dadurch, dass eine Milchproteine umfassende Trocknungsbasis, die ein Milchprodukt oder eine Milchfraktion, beispielsweise Serum, demineralisiertes Serum, Milch, konzentrierte Milch oder konzentrierte entrahmte Milch ist, in das anionische Eluat gemischt wird, das mit Citraten angefüllt und konzentriert ist, wobei die Beimischungsquote der Trocknungsbasis so angepasst wird, dass das Massenverhältnis zwischen den Citraten und Calcium in dem Inhaltsstoff zwischen 20 und 130 liegt, und dadurch, dass die Mischung, die das anionische Eluat, das mit Citraten angefüllt und konzentriert ist, und die Trocknungsbasis umfasst, für den Erhalt eines Inhaltsstoffs in Form von Pulver sprühgetrocknet wird.

13. Inhaltsstoff, der die gleichen Funktionalitäten wie die Schmelzsalze aufweist, **dadurch gekennzeichnet, dass** er in flüssiger Form ist, dadurch, dass er durch das Verfahren nach einem der Ansprüche 1 bis 11 erhältlich ist, dadurch, dass er Citrate, Lactate und Phosphate umfasst, und dadurch, dass das Massenverhältnis zwischen den Citraten und Calcium in dem Inhaltsstoff höher als 20 ist.

14. Inhaltsstoff, der die gleichen Funktionalitäten wie die Schmelzsalze aufweist, **dadurch gekennzeichnet, dass** er in Form von Pulver ist, dadurch, dass er durch das Verfahren nach Anspruch 12 erhältlich ist, dadurch, dass er Citrate, Lactate und Phosphate umfasst, und dadurch, dass das Massenverhältnis zwischen den Citraten und Calcium in dem Inhaltsstoff zwischen 20 und 130 liegt.

15. Verwendung des Inhaltsstoffs nach einem der Ansprüche 13 und 14 als Schmelzsalz.

## Claims

1. Method for producing an ingredient rich in citrates having the same functionalities as a melting salt, said method comprising at least one stage involving extracting citrates contained in a dairy fraction, the calcium content in the final ingredient being monitored throughout the said method so that the weight ratio between the citrates and the calcium in the ingredient is greater than 20.

2. Method according to claim 1, **characterised in that** the dairy fraction is whey.

3. Method according to claim 2, **characterised in that** the whey is skimmed, dialysed, de-cationised and pasteurised.

4. Method according to any one of claims 1 to 3, **characterised in that** the stage of extracting citrates is carried out by passing a whey through an anion column.

5. Method according to claim 4, **characterised in that** the anion column is regenerated with a solution in order to remove the minerals accumulated during the passage of the whey from the resin particles of the said anion column.

6. Method according to claim 5, **characterised in that** the anion column is regenerated with a basic solution, for example sodium hydroxide or potassium hydroxide or with salts, for example sodium carbonates.

7. Method according to any one of claims 4 to 6, **characterised in that** a part rich in citrates is recovered from the anion eluate obtained from the regeneration of the anion column.

8. Method according to claim 7, **characterised in that** the part rich in citrates comprises at least 20% of citrates in the dry extract of the said part rich in citrates.

9. Method according to either one of claims 7 and 8, **characterised in that** the pH of the part rich in citrates from the anion eluate is between 5.5 and 7.

10. Method according to any one of claims 4 to 9, **characterised in that** the recovery of the part rich in citrates from the anion eluate is carried out in two phases:
- the start of the recovery is activated when the percentage of dry extract in the anion eluate reaches a minimum value of at least 2%, and
- the stop of the recovery is activated when the instantaneous pH of the anion eluate reaches a specific maximum threshold value for which the pH of the part rich in citrates from the anion eluate is between 5.5 and 7.

11. Method according to claim 10, **characterised in that** the conductivity of the anion eluate is measured and **in that** the start and stop of the recovery of the anion eluate are controlled respectively:
- when the conductivity of the anion eluate reaches a first value corresponding to the minimum value of the percentage of dry extract that activates the start of the recovery, and
- when the conductivity of the anion eluate reaches a second value corresponding to the stop at the determined maximum threshold value of the instantaneous pH of the anion eluate that activates the stop of the recovery.

12. Method according to any one of claims 7 to 11, **characterised in that** the part rich in citrates from the anion eluate is concentrated, **in that** a drying base comprising milk proteins that is a milk product or a milk fraction, for example whey, demineralised whey, milk, concentrated milk or concentrated skimmed milk, is mixed with the anion eluate loaded with citrates and is concentrated, the degree of incorporation of the drying base being adjusted so that the weight ratio between the citrates and the calcium in the ingredient is between 20 and 130, and **in that** the mixture comprising the anion eluate loaded with citrates and concentrated, and the drying base, is spray dried in order to obtain an ingredient in the form of powder.

13. Ingredient having the same functionalities as melting salts, **characterised in that** it is in liquid form, **in that** it can be obtained by the method according to any one of claims 1 to 11, **in that** it comprises citrates, lactates and phosphates, and **in that** the weight ratio between the citrates and the calcium in the said ingredient is greater than 20.

14. Ingredient having the same functionalities as melting salts, **characterised in that** it is in the form of powder, **in that** it can be obtained by the method according to claim 12, **in that** it comprises citrates, lactates and phosphates, and **in that** the weight ratio between the citrates and the calcium in the said ingredient is between 20 and 130.

15. Use of the ingredient according to either one of claims 13 and 14 as melting salt.
